(19) Europäisches Patentamt
European Patent Office
Office européen des brevets

(11) **EP 4 464 803 A1**

(12) **EUROPEAN PATENT APPLICATION**
published in accordance with Art. 153(4) EPC

(43) Date of publication:
**20.11.2024 Bulletin 2024/47**

(21) Application number: 22928731.3

(22) Date of filing: **28.02.2022**

(51) International Patent Classification (IPC):
*C21D 9/46* (2006.01)   *C22C 38/00* (2006.01)
*C23C 2/06* (2006.01)   *C23C 2/28* (2006.01)

(52) Cooperative Patent Classification (CPC):
**C21D 9/46; C22C 38/00; C22C 38/14; C22C 38/60;
C23C 2/06; C23C 2/28**

(86) International application number:
**PCT/JP2022/008224**

(87) International publication number:
**WO 2023/162205 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: JFE Steel Corporation
Tokyo 100-0011 (JP)

(72) Inventors:
• **HATA, Katsuya**
**Tokyo 100-0011 (JP)**
• **NAKAGAITO, Tatsuya**
**Tokyo 100-0011 (JP)**

(74) Representative: **Hoffmann Eitle
Patent- und Rechtsanwälte PartmbB
Arabellastraße 30
81925 München (DE)**

(54) **STEEL SHEET, MEMBER AND METHODS FOR PRODUCING THESE**

(57)    Provided are a steel sheet and a member having excellent material uniformity and high strength, and methods for manufacturing them.

A steel sheet having a chemical composition comprising, by mass%, C: 0.10% or more and 0.30% or less, Si: 0.01% or more and 3.0% or less, Mn: 1.0% or more and 3.5% or less, P: 0.002% or more and 0.100% or less, S: 0.0002% or more and 0.0200% or less, sol. Al: 0.20% or less (not including 0%), N: 0.010% or less, and Ti: 0.008 or more and 0.10% or less, the balance being Fe and incidental impurities,

in which a steel sheet microstructure contains, in terms of area fraction, ferrite: 5% or more and 50% or less, and a total of martensite and bainite: 50% or more and 95% or less, non-recrystallized ferrite in the ferrite is 0% or more and 10% or less, in terms of area fraction, based on the entire microstructure, and a difference between a maximum value and a minimum value of the area fraction of the non-recrystallized ferrite in a sheet width direction of the steel sheet is 5% or less.

**EP 4 464 803 A1**

**Description**

Technical Field

The present invention relates to a steel sheet and a member used for an automotive part and so forth, and methods for manufacturing them. More particularly, the present invention relates to a high strength steel sheet and a high strength member having excellent material uniformity, and methods for manufacturing them.

Background Art

In recent years, attempts have been made to reduce the amount of emission gas such as $CO_2$ from the viewpoint of global environmental conservation. In the automobile industry, measures are being taken to reduce the amount of emission gas by reducing the weight of the automotive body and improving fuel efficiency. One of the methods of reducing the body weight of an automobile is to reduce the sheet thickness through the enhancement of the strength of a steel sheet used for the automobile. Ductility is known to decrease as the strength of a steel sheet increases, and thus there is a need for a steel sheet having both high strength and ductility. Furthermore, in the case of a high strength steel sheet, the strength and formability vary greatly, and the reproducibility of shape fixation is low. This causes problems, such as variations in product dimensions, and local cracking, thereby leading to difficulty in maintaining the shape of a part. Therefore, there is a need for a steel sheet having no variation in mechanical properties over the entire width and length of the steel sheet and having excellent material uniformity.

For example, Patent Literature 1 discloses a steel sheet having excellent formability by specifying alloy components, forming a microstructure containing ferrite and martensite, and limiting the heating rate during annealing.

Patent Literature 2 provides a high strength steel sheet having excellent material uniformity and only a small variation in tensile strength in the longitudinal direction of the steel sheet by specifying alloy components to form a ferrite-martensite microstructure and controlling the coiling temperature to reduce a difference in microstructure in the longitudinal direction of the steel sheet.

Citation List

Patent Literature

PTL 1: Japanese Patent No. 4860784
PTL 2: Japanese Unexamined Patent Application Publication No. 2018-16873

Summary of Invention

Technical Problem

However, in the technology of Patent Literature 1, when a precipitate element such as Ti is added, the restriction of the heating rate during annealing is insufficient to reduce variations in the hole expansion ratio. In addition, in the technique of Patent Literature 2, the coiling temperature in the width direction of the steel sheet is not appropriately controlled, and thus the material uniformity is considered to be insufficient. As described above, it is considered that the techniques described in Patent Literature 1 and Patent Literature 2 are insufficient to achieve both a tensile strength of 1,180 MPa or more and material uniformity in the sheet width direction.

The present invention has been made to solve such problems, and an object of the present invention is to provide a steel sheet and a member having excellent material uniformity and high strength, and methods for manufacturing them.

Here, the high strength means that the tensile strength (TS) is 1,180 MPa or more in a tensile test performed at a tensile speed of 10 mm/min at the center portion in the longitudinal direction (rolling direction) and the center portion in the width direction of the steel sheet in accordance with the requirements of JIS Z 2241 (2011).

Excellent material uniformity indicates that the difference between the maximum value and the minimum value of the hole expansion ratio in the sheet width direction of the steel sheet is 10% or less, as determined by the following method.

(i) Three test pieces of 100 mm square are taken from each of a total of five locations, i.e., a center portion and both end portions (positions 50 mm away from the edges of the steel sheet in the width direction toward the center of the steel sheet in the width direction) of a steel sheet in the width direction, and a 1/4 position and a 3/4 position in the width direction. Then a hole expansion test is performed. The difference between the maximum value and the minimum value of the average values of the three test pieces at the respective locations is defined as the difference between the maximum value and the minimum value of the hole expansion ratio in the sheet width direction.

(ii) In the above hole expansion test, a test piece is punched with a punch having a diameter of 10 mm and a die having a clearance of 12.5%. The hole is expanded with a conical punch having a vertex angle of 60° and a travel speed of 10 mm/min with the burr face facing upward. The hole expansion ratio ($\lambda$) is measured based on the following formula:

$$\text{Hole expansion ratio } \lambda \ (\%) = \{(D - D0)/D0\} \times 100$$

where D: the diameter of the hole when a crack penetrates through the sheet thickness, and D0: the initial hole diameter (10 mm).

Solution to Problem

The inventors have conducted intensive studies to solve the above problems and have obtained the following findings. It was found that the addition of Ti is necessary for high strength and good castability, and the difference between the maximum value and the minimum value of the area fraction of non-recrystallized ferrite in the steel sheet in the sheet width direction needs to be 5% or less in order to reduce variations in the mechanical properties of the steel sheet in the sheet width direction.

As described above, the inventors have conducted various studies to solve the above problems, and have found that a high strength steel sheet having excellent material uniformity can be obtained by controlling variations in the area fraction of non-recrystallized ferrite in the sheet width direction of a steel sheet having a specific chemical composition and a steel microstructure mainly composed of ferrite, bainite, and martensite. These findings have led to the completion of the present invention.

The present invention has been made on the basis of the above findings. Specifically, the present invention provides the following.

[1] A steel sheet having a chemical composition containing, by mass%:

C: 0.10% or more and 0.30% or less,
Si: 0.01% or more and 3.0% or less,
Mn: 1.0% or more and 3.5% or less,
P: 0.002% or more and 0.100% or less,
S: 0.0002% or more and 0.0200% or less,
sol. Al: 0.20% or less (not including 0%),
N: 0.010% or less, and
Ti: 0.008 or more and 0.10% or less,
the balance being Fe and incidental impurities,

in which a steel sheet microstructure contains, in terms of area fraction, ferrite: 5% or more and 50% or less, and a total of martensite and bainite: 50% or more and 95% or less,
non-recrystallized ferrite in the ferrite is 0% or more and 10% or less, in terms of area fraction, based on the entire microstructure, and
a difference between the maximum value and the minimum value of the area fraction of the non-recrystallized ferrite in the sheet width direction of the steel sheet is 5% or less.

[2] The steel sheet described in [1], in which a difference between the maximum value and the minimum value of the area fraction of the non-recrystallized ferrite in the longitudinal direction of the steel sheet is 5% or less.
[3] The steel sheet described in [1] or [2], in which the chemical composition further contains, by mass%, one or two or more selected from:

Nb: 0.2% or less,
B: 0.0050% or less,
Cu: 1% or less,
Ni: 0.5% or less,
Cr: 1.0% or less,

Mo: 0.3% or less,
V: 0.45% or less,
Zr: 0.2% or less, and
W: 0.2% or less.

[4] The steel sheet described in any one of [1] to [3], in which the chemical composition further contains, by mass%, one or two or more selected from:

Sb: 0.1% or less,
Sn: 0.1% or less,
Ca: 0.0050% or less,
Mg: 0.01% or less, and
REM: 0.01% or less.

[5] The steel sheet described in any one of [1] to [4], in which the steel sheet has a coated layer on a surface thereof.
[6] A member obtained by subjecting the steel sheet described in any one of [1] to [5] to at least one of forming and welding.
[7] A method for manufacturing the steel sheet described in any one of [1] to [4], the method including:

a hot rolling step of heating a steel slab at 1,220°C or higher for 1.0 hour or more, hot-rolling the steel slab, and performing coiling at a coiling temperature of 650°C or lower with a difference in coiling temperature of 50°C or lower in a temperature distribution in a sheet width direction to obtain a hot rolled steel sheet;
a cold rolling step of cold-rolling the hot rolled steel sheet after the hot rolling step to obtain a cold rolled steel sheet; and
an annealing step of heating the cold rolled steel sheet to an annealing temperature of higher than an Ac1 point and equal to or lower than (an Ac3 point + 50°C), the annealing temperature satisfying expression (1) in a temperature range of 600°C to 700°C and having a temperature difference of 50°C or lower in the temperature distribution in the sheet width direction,
[Math. 1]

$$2500 \leq \sum_{i=1}^{n} T_i \times t \quad \cdots \text{expression (1)}$$

where in expression (1), t is a time (second) obtained by dividing a time taken from 600°C to 700°C into n equal parts (n: an integer of 10 or more), $T_i = (S_{i+1} + S_i)/2$, i: a natural number of n or less, $S_1 = 600°C$, $S_{n+1} = 700°C$, and $S_i$ is a temperature (°C) at a time $t \times (i - 1)$ seconds after a time when the temperature reaches 600°C.
[8] The method for manufacturing the steel sheet described in [7], in which in the hot rolling step, the steel slab is heated at 1,220°C or higher for 1.0 hour or more, hot-rolled, and coiled at a coiling temperature of 650°C or lower with a difference in coiling temperature of 50°C or lower in the temperature distribution in the sheet width direction and a difference in coiling temperature of 70°C or lower in a temperature distribution in the longitudinal direction of the steel sheet to obtain a hot rolled steel sheet.
[9] The method for manufacturing the steel sheet described in [7] or [8], further including a coating step of performing coating treatment after the annealing step.
[10] The method for manufacturing the steel sheet described in [9], in which in the coating step, hot-dip galvanizing treatment is performed.
[11] The method for manufacturing the steel sheet described in [10], in which alloying treatment is performed after the hot-dip galvanizing treatment in the coating step.
[12] The method for manufacturing the steel sheet described in any one of [9] to [11], further including, after the coating step, a reheating step of cooling the steel sheet to a cooling stop temperature equal to or higher than room temperature and equal to or lower than 250°C, then reheating the steel sheet to a temperature range of the cooling stop temperature to 440°C, and holding the steel sheet for 20 seconds or more.
[13] A method for manufacturing a member, including a step of subjecting a steel sheet manufactured by the method for manufacturing the steel sheet according to any one of Claims 7 to 12 to at least one of forming and welding.
Advantageous Effects of Invention

According to the present invention, a high strength steel sheet having excellent material uniformity can be obtained. The application of the high strength steel sheet of the present invention to an automotive structural member, for example, makes it possible to achieve both high strength and material uniformity. That is, according to the present invention, a good part shape can be maintained, and therefore, the performance of the automotive body is improved.

Description of Embodiments

Embodiments of the present invention will be described below. The present invention is not limited to the following embodiments.

A steel sheet of the present invention has a chemical composition containing, by mass%, C: 0.10% or more and 0.30% or less, Si: 0.01% or more and 3.0% or less, Mn: 1.0% or more and 3.5% or less, P: 0.002% or more and 0.100% or less, S: 0.0002% or more and 0.0200% or less, sol. Al: 0.20% or less (not including 0%), N: 0.010% or less, and Ti: 0.008 or more and 0.10% or less,
the balance being Fe and incidental impurities, in which a steel sheet microstructure contains, in terms of area fraction, ferrite: 5% or more and 50% or less, and a total of martensite and bainite: 50% or more and 95% or less, non-recrystallized ferrite in the ferrite is 0% or more and 10% or less, in terms of area fraction, based on the entire microstructure, and a difference between the maximum value and the minimum value of the area fraction of the non-recrystallized ferrite in the sheet width direction of the steel sheet is 5% or less.

First, the chemical composition of the high strength steel sheet of the present invention (hereinafter, also referred to as a "steel sheet of the present invention") will be described. In the following description of the chemical composition, "%" as a unit of a component content indicates "mass%". In the present invention, "high strength" refers to a tensile strength of 1,180 MPa or more.

C: 0.10% or More and 0.30% or Less

C is contained from the viewpoint of increasing the strength of martensite or bainite and ensuring TS ≥ 1,180 MPa. A C content of less than 0.10% results in failure to achieve predetermined strength. Therefore, the C content is 0.10% or more. The C content is preferably 0.11% or more. A C content of more than 0.30% results in excessively high strength, leading to a deterioration in flangeability. In addition, the amount of carbides formed increases; thus, recrystallization is less likely to occur, deteriorating the material uniformity. Therefore, the C content is 0.30% or less. The C content is preferably 0.28% or less, more preferably 0.26% or less.

Si: 0.01% or More and 3.0% or Less

Si is an element that strengthens steel through solid solution strengthening. In order to provide this effect, the Si content is 0.01% or more. The Si content is preferably 0.02% or more, more preferably 0.03% or more. An excessively high Si content leads to a significant increase in rolling load in hot rolling and cold rolling. Si has the effect of inhibiting the formation of cementite. Thus, an excessively high Si content results in inhibition of the formation of cementite. C that has not precipitated forms carbides with Nb and Ti. The carbides coarsen, thereby deteriorating the material uniformity. It also leads to a decrease in toughness. Therefore, the Si content is 3.0% or less. The Si content is preferably 2.7% or less, more preferably 2.4% or less.

Mn: 1.0% or More and 3.5% or Less

Mn is contained in order to improve the hardenability of steel and to set the total area fraction of martensite and bainite to a predetermined range. A Mn content of less than 1.0% results in insufficient hardenability to cause excessive formation of pearlite, thereby deteriorating the material uniformity. In addition, Mn is contained in order to fix S in steel in the form of MnS and to reduce hot shortness. Therefore, the Mn content is 1.0% or more. The Mn content is preferably 1.3% or more, more preferably 1.6% or more. An excessively high Mn content causes a difference in ferrite transformation start temperature after hot rolling between Mn enriched and depleted portions due to casting segregation. As a result, the microstructure does not become a microstructure composed of ferrite and pearlite in the entire region of the steel sheet at the coiling temperature after hot rolling, and a bainite microstructure is formed in a part of the steel sheet. Thus, the uniformity of the microstructure after annealing deteriorates markedly, failing to achieve the material stability targeted in the present invention. Therefore, the upper limit of the Mn content is 3.5%. The Mn content is preferably 3.3% or less, more preferably 3.1% or less.

P: 0.002% or More and 0.100% or Less

P is an element that strengthens steel. However, a high P content results in significantly deteriorated spot weldability. Therefore, the P content is 0.100% or less. From the above viewpoints, the P content is preferably 0.050% or less, more preferably 0.010% or less. The lower limit of the P content that is currently industrially feasible is 0.002%. Therefore, the P content is 0.002% or more.

S: 0.0002% or More and 0.0200% or Less

S forms coarse sulfides in steel. Those sulfides elongate during hot rolling into wedge-shaped inclusions, adversely affecting weldability. S is also a harmful element and thus is preferably minimized as much as possible. To reduce the adverse effect of the inclusions, the S content needs to be at least 0.0200% or less. When more severe welding conditions are used, the S content is preferably 0.0100% or less, more preferably 0.0010% or less. The lower limit of the S content that is currently industrially feasible is 0.0002%. Therefore, the S content is 0.0002% or more.

Sol. Al: 0.20% or Less (not including 0%)

Al is contained in order to perform sufficient deoxidation and reduce inclusions in steel. To stably perform deoxidation, the sol. Al content is preferably 0.005% or more, more preferably 0.01% or more. At a sol. Al content of more than 0.20%, carbides formed during coiling after hot rolling are less likely to dissolve in an annealing step to inhibit recrystallization, thereby deteriorating the material uniformity. Therefore, the sol. Al content is 0.20% or less, preferably 0.15% or less, more preferably 0.10% or less.

N: 0.010% or Less

N is an element that forms nitride and carbonitride-based inclusions in steel, such as TiN, (Nb, Ti)(C, N), and AlN. At a N content of more than 0.010%, variations in precipitates in the longitudinal direction of the steel sheet cannot be reduced, and variations in the area fraction of non-recrystallized ferrite in the longitudinal direction of the steel sheet increases, resulting in a deterioration in material uniformity. To reduce such adverse effects, the N content is 0.010% or less. Preferably, the N content is 0.0055% or less. The lower limit of the N content that is currently industrially feasible is 0.0006%. Therefore, the N content is preferably 0.0006% or more.

Ti: 0.008% or More and 0.10% or Less

Ti contributes to an increase in strength through refinement of the internal structure of martensite and bainite. In addition, the fixation of N in the form of TiN reduces the amount of AlN, which adversely affects the castability, thereby improving the castability. From this point of view, the Ti content is 0.008% or more. The Ti content is preferably 0.009% or more, more preferably 0.01% or more. An excessively high Ti content results in the formation of a large amount of Ti-containing inclusions. This increases variations in the area fraction of non-recrystallized ferrite in the sheet width direction of a steel sheet, thereby deteriorating the material uniformity. To reduce such adverse effects, the Ti content is 0.10% or less. The Ti content is preferably 0.08% or less, more preferably 0.06% or less.

The steel sheet of the present invention has a chemical composition containing the above-mentioned components and the balance being Fe (iron) and incidental impurities. In particular, the steel sheet according to an embodiment of the present invention preferably has a chemical composition containing the above-described components and the balance being Fe and incidental impurities.

The steel sheet of the present invention may contain the following optional elements. When the following optional elements are contained in amounts less than the preferred lower limits, the optional elements may be considered to be contained as incidental impurities.

One or Two or More Selected from Nb: 0.2% or Less, B: 0.0050% or Less, Cu: 1% or Less, Ni: 0.5% or Less, Cr: 1.0% or Less, Mo: 0.3% or Less, V: 0.45% or Less, Zr: 0.2% or Less, and W: 0.2% or Less

One or two more of Nb, B, Cu, Ni, Cr, Mo, V, Zr, and W can be contained from the viewpoints of increasing strength by refining crystal grains and improving the hardenability of steel. When an excessive amount of Nb, B, Cu, Ni, Cr, Mo, V, Zr, or W is contained, hardenability is too high due to the formation of inclusions, and the desired steel microstructure is not obtained, causing a deterioration in material stability. Thus, when Nb, B, Cu, Ni, Cr, Mo, V, Zr, and W are contained, the respective element contents are as follows: Nb: 0.2% or less, B: 0.0050% or less, Cu: 1% or less, Ni: 0.5% or less, Cr: 1.0% or less, Mo: 0.3% or less, V: 0.45% or less, Zr: 0.2% or less, and W: 0.2% or less. The effects of the present invention are provided when the element contents are not more than the upper limits described above; thus, the lower limits of the element contents are not particularly limited.

From the viewpoint of more effectively providing the effect of improving the stretch flangeability, the respective element contents are preferably as follows: Nb: 0.001% or more, B: 0.0003% or more, Cu: 0.001% or more, Ni: 0.01% or more, Cr: 0.001% or more, Mo: 0.01% or more, V: 0.001% or more, Zr: 0.001% or more, and W: 0.005% or more.

The Nb content is more preferably 0.005% or more, even more preferably 0.01% or more. The Nb content is more preferably 0.1% or less, even more preferably 0.05% or less.

The B content is more preferably 0.0045% or less, even more preferably 0.0040% or less.

The Cu content is more preferably 0.05% or more, even more preferably 0.1% or more. The Cu content is more preferably 0.6% or less, even more preferably 0.4% or less.

The Ni content is more preferably 0.1% or less, even more preferably 0.05% or less.

The Cr content is more preferably 0.005% or more, even more preferably 0.01% or more. The Cr content is more preferably 0.8% or less, even more preferably 0.6% or less.

The Mo content is more preferably 0.1% or less, even more preferably 0.05% or less.

The V content is more preferably 0.1% or less, even more preferably 0.05% or less.

The Zr content is more preferably 0.002% or more, even more preferably 0.004% or more. The Zr content is more preferably 0.1% or less, even more preferably 0.01% or less.

The W content is more preferably 0.1% or less, even more preferably 0.05% or less.

Sb: 0.1% or Less, Sn: 0.1% or Less, Ca: 0.0050% or Less, Mg: 0.01% or Less, and REM: 0.01% or Less

Sb, Sn, Ca, Mg, and REM are elements used for adjusting strength, controlling inclusions, and so forth. The effects of the present invention are not impaired even if one or two or more of these elements are contained in amounts of not more than the upper limits described above. Thus, when Sb, Sn, Ca, Mg, and REM are contained, the respective element contents are as follows: Sb: 0.1% or less, Sn: 0.1% or less, Ca: 0.0050% or less, Mg: 0.01% or less, and REM: 0.01% or less. The effects of the present invention are provided when the element contents are not more than the upper limits described above; thus, the lower limits of the element contents are not particularly limited.

From the viewpoints of more effectively providing the effects of the above-mentioned strength adjustment and inclusion control, the respective element contents are preferably as follows: Sb: 0.001% or more, Sn: 0.001% or more, Ca: 0.0002% or more, Mg: 0.0002% or more, and REM: 0.0002% or more.

The Sb content is more preferably 0.002% or more, even more preferably 0.005% or more. The Sb content is more preferably 0.02% or less, even more preferably 0.015% or less.

The Sn content is more preferably 0.002% or more, even more preferably 0.005% or more. The Sn content is more preferably 0.05% or less, even more preferably 0.02% or less.

The Ca content is more preferably 0.0005% or more, even more preferably 0.0010% or more. The Ca content is more preferably 0.0040% or less, even more preferably 0.0030% or less.

The Mg content is more preferably 0.0003% or more, even more preferably 0.0004% or more. The Mg content is more preferably 0.005% or less, even more preferably 0.001% or less.

The REM content is more preferably 0.005% or less, even more preferably 0.001% or less.

The steel microstructure of a steel sheet of the present invention will be described below. The steel sheet of the present invention contains ferrite: 5% or more and 50% or less, and the total of martensite and bainite: 50% or more and 95% or less, in terms of area fraction, based on the entire steel microstructure, non-recrystallized ferrite in the ferrite is 0% or more and 10% or less, in terms of area fraction, based on an entire microstructure, and a difference between the maximum value and the minimum value of the area fraction of the non-recrystallized ferrite in the sheet width direction of the steel sheet is 5% or less.

Area Fraction of Ferrite: 5% or More and 50% or Less

Ferrite is soft; thus, a ferrite content or more than 50% results in failure to obtain a desired tensile strength. Thus, the area fraction of ferrite is 50% or less. The area fraction of ferrite is preferably 45% or less, more preferably 40% or less. A ferrite content of less than 5% leads to insufficient distribution of C or Mn, making it impossible to ensure a desired uniformity of the microstructure in the sheet width direction of the steel sheet. Therefore, the area fraction of ferrite is 5% or more, preferably 7% or more, more preferably 9% or more.

Total of Area Fraction of Martensite and Bainite: 50% or More and 95% or Less

Martensite and bainite are harder than ferrite and are necessary for increasing the strength of a steel sheet. Thus, a total area fraction of less than 50% results in failure to obtain a desired tensile strength. Thus, the total area fraction of martensite and bainite is 50% or more, preferably 55% or more, more preferably 60% or more. A total area fraction of more than 95% results in excessive strength. In addition, the amounts of precipitates formed in ferrite increase; thus, recrystallization is inhibited to increase the variations in the area fraction of non-recrystallized ferrite in the sheet width direction of the steel sheet, resulting in a deterioration in material uniformity. The total area fraction of martensite and bainite is preferably 93% or less, more preferably 91% or less.

The remaining microstructure other than ferrite, bainite, and martensite may contain retained austenite, pearlite, and so forth. The remaining microstructure may be contained within a range that does not impair the effects of the present invention. In the present invention, the remaining microstructure is permissible when its area fraction is 15% or less. The area fraction of the remaining microstructure is preferably 10% or less. The area fraction of the remaining microstructure may be 0%. That is, the steel sheet of the present invention may be composed of ferrite: 5% to 50% and the total of martensite and bainite: 50% to 95%, in terms of area fraction, based on the entire steel microstructure.

In the present invention, ferrite is a microstructure formed by transformation from austenite at a relatively high temperature and composed of crystal grains of a BCC lattice. Martensite refers to a hard microstructure formed from austenite at a low temperature (equal to or lower than the martensite transformation point). Bainite is formed from austenite at a relatively low temperature (equal to or higher than the martensite transformation point) and refers to a hard microstructure in which fine carbides are dispersed in needle-like or plate-like ferrite. Pearlite is a microstructure that is formed from austenite at a relatively high temperature and is composed of layered ferrite and cementite. Retained austenite is formed when the martensite transformation point is equal to or lower than room temperature due to an increase in the concentration of an element, such as C, in austenite.

Area Fraction of Non-Recrystallized Ferrite in Ferrite Based on Entire Microstructure: 0% or More and 10% or Less

Non-recrystallized ferrite used in the present invention refers to a ferrite grain having a sub-grain boundary in a crystal grain. Non-recrystallized ferrite recrystallizes into ferrite during annealing. When the area fraction of non-recrystallized ferrite is more than 10% based on the entire microstructure, the recrystallization ratio varies in the width direction and longitudinal direction of the steel sheet, thereby deteriorating the material uniformity. When the area fraction of non-recrystallized ferrite is 10% or less based on the entire microstructure, variations in recrystallization can be reduced. Thus, in the area fraction of ferrite, the area fraction of non-recrystallized ferrite is 10% or less, preferably 8% or less, based on the entire microstructure. A smaller amount of non-recrystallized ferrite is more preferred, and the amount of non-recrystallized ferrite may be 0%.

Difference between Maximum Value and Minimum Value of Area Fraction of Non-Recrystallized Ferrite in Sheet Width Direction of Steel Sheet: 5% or Less

The area fraction of non-recrystallized ferrite directly contributes to the hole expansion ratio. Therefore, reducing the variations in the area fraction of non-recrystallized ferrite in the sheet width direction can provide excellent material uniformity. In the present invention, the difference between the maximum value and the minimum value of the area fraction of non-recrystallized ferrite measured at a center portion and both end portions in the width direction (perpendicular to the rolling direction) of the steel sheet and a 1/4 position and a 3/4 position in the width direction is defined as a "difference between the maximum value and the minimum value of the area fraction of non-recrystallized ferrite in the sheet width direction of the steel sheet".

To obtain excellent material uniformity, the difference between the maximum value and the minimum value of the area fraction of non-recrystallized ferrite is 5% or less. The difference is preferably 4% or less, more preferably 3% or less. The lower limit of the difference is not particularly limited and may be 0%. The difference can be measured by the following method.

(Suitable Condition) Difference between Maximum Value and Minimum Value of Area Fraction of Non-Recrystallized Ferrite in Longitudinal Direction of Steel Sheet: 5% or Less

As described above, the area fraction of non-recrystallized ferrite directly contributes to the hole expansion ratio. Therefore, reducing the variations in the area fraction of non-recrystallized ferrite in the longitudinal direction of the steel sheet can provide excellent material uniformity. In the present invention, the difference between the maximum value and the minimum value of the area fraction of non-recrystallized ferrite in the longitudinal direction of the steel sheet is preferably 5% or less, more preferably 4% or less. The lower limit of the difference between the maximum value and the minimum value of the area fraction of non-recrystallized ferrite in the longitudinal direction of the steel sheet is not particularly limited and may be 0%.

In the present invention, "the difference between the maximum value and the minimum value of the area fractions of non-recrystallized ferrite in the longitudinal direction of the steel sheet is 5% or less" indicates that the difference between the maximum value and the minimum value of the area fraction of non-recrystallized ferrite on a steel sheet (coil) basis is 5% or less over the entire length of the steel sheet in the longitudinal direction (rolling direction).

For the quantification of the metallic microstructure, test pieces are taken from each steel sheet in a direction perpendicular to the rolling direction at five locations, i.e., a center portion and both end portions (positions 50 mm away from the end portions of the steel sheet in the width direction toward the center of the steel sheet in the width direction) in the sheet width direction of the steel sheet and a 1/4 position and a 3/4 position in the width direction. Then, a cross section parallel to the rolling direction and perpendicular to the steel sheet surface is mirror-polished.

The sampling positions for these five locations in the longitudinal direction of the steel sheet are the center portion in the longitudinal direction of the steel sheet. In addition, test pieces are similarly taken from a leading end portion (a position 1 m away from the leading edge toward the center in the longitudinal direction), a center portion, and a trailing end portion (a position 1 m away from the trailing edge toward the center in the longitudinal direction) of the steel sheet in the longitudinal direction (rolling direction) in such a manner that the cross section parallel to the rolling direction and perpendicular to the steel sheet surface is an observation surface. Then the test pieces are mirror-polished.

In the leading end portion, the center portion, and the trailing end portion of the steel sheet in the longitudinal direction (rolling direction) of the steel sheet, the test pieces are taken from the center portion in the width direction.

The cross sections in the thickness direction are etched with a nital solution to expose the microstructure, and then observed with a scanning electron microscope (SEM). The area fractions of ferrite, martensite, bainite, and non-recrystallized ferrite are examined by the point counting method, according to which a $16 \times 15$ mesh with a 4.8 $\mu$m interval is overlaid on an 82 $\mu$m $\times$ 57 $\mu$m area in actual length in a 1,500$\times$ SEM image, and the number of mesh points that fall in the individual phases is counted.

Each area fraction is determined by an average value of three area fractions obtained from separate 1,500$\times$ SEM images. The area fractions of ferrite, martensite, and bainite in the present invention are values determined at the center portion in the longitudinal direction of the center portion in the width direction of the steel sheet.

The area fractions of non-recrystallized ferrite are determined at the center portion and both end portions in the width direction, and at the 1/4 position and the 3/4 position in the width direction. The difference between the maximum value and the minimum value of the measurements at a total of five locations is calculated. Similarly, the area fractions are determined at the leading end portion, the center portion, and the trailing end portion in the longitudinal direction of the steel sheet. The difference between the maximum value and the minimum value of the measurements taken at the three locations is calculated. Ferrite and non-recrystallized ferrite appear as black microstructures, and martensite appears as a white microstructure. Non-recrystallized ferrite has sub-boundaries within the crystal grains, and the sub-boundaries appear as white. Bainite is a hard microstructure that is formed from austenite at a relatively low temperature (equal to or higher than the martensite transformation point) and in which fine carbides are dispersed in acicular or plate-like ferrite.

The area fraction of the remaining microstructure other than ferrite, martensite, and bainite is calculated by subtracting the total area fraction of ferrite, martensite, and bainite from 100%. In the present invention, the remaining microstructure is considered to be the total area fraction of pearlite and retained austenite.

The difference between the maximum value and the minimum value of the area fraction of non-recrystallized ferrite measured at the center portion, both end portions, the 1/4 position, and the 3/4 position in the width direction (perpendicular to the rolling direction) of the steel sheet is defined as a "difference between the maximum value and the minimum value of the area fraction of non-recrystallized ferrite in the sheet width direction of the steel sheet".

The difference between the maximum value and the minimum value of the area fraction of non-recrystallized ferrite measured at the leading end portion, the center portion, and the trailing end portion in the longitudinal direction (rolling direction) of the steel sheet is defined as a "difference between the maximum value and the minimum value of the area fraction of non-recrystallized ferrite in the longitudinal direction of the steel sheet".

The steel sheet of the present invention may have a coated layer on a surface of the steel sheet. Examples of the coated layer include, but are not particularly limited to, galvanized layers, such as electrogalvanized layers, hot-dip galvanized layers, and hot-dip galvannealed layers.

The characteristics of the high strength steel sheet of the present invention will be described below.

The strength of the steel sheet of the present invention is such that the tensile strength (TS) is 1,180MPa or more, as measured by a method described in Examples.

The steel sheet of the present invention has excellent material uniformity. Specifically, the difference between the maximum value and the minimum value of the hole expansion ratio in the sheet width direction of the steel sheet, which is measured by a method described in Examples, is 10% or less. The difference between the maximum value and the minimum value of the hole expansion ratio is preferably 5% or less, more preferably 3% or less.

The hole expansion ratio is preferably, but not particularly limited to, 10% or more, more preferably 15% or more.

The steel sheet of the present invention preferably has a sheet thickness of 0.5 mm or more, more preferably 0.7 mm or more. The steel sheet of the present invention preferably has a sheet thickness of 3.0 mm or less, more preferably 2.0 mm or less. The steel sheet of the present invention preferably has a length in the sheet width direction of 600 mm or more, more preferably 700 mm or more. The steel sheet of the present invention preferably has a length in the sheet width direction of 1,600 mm or less, more preferably 1,400 mm or less.

The steel sheet of the present invention preferably has a length in the longitudinal direction (rolling direction) of 100 m or more, more preferably 500 m or more. The steel sheet of the present invention preferably has a length in the longitudinal direction (rolling direction) of 3,000 m or less, and more preferably 2,000 m or less.

A method for manufacturing a steel sheet of the present invention will be described below.

A method for manufacturing a steel sheet of the present invention includes a hot rolling step of heating a steel slab at 1,220°C or higher for 1.0 hour or more, hot-rolling the steel slab, and performing coiling at a coiling temperature of 650°C or lower with a difference in coiling temperature of 50°C or lower in a temperature distribution in a sheet width direction to obtain a hot rolled steel sheet;

a cold rolling step of cold-rolling the hot rolled steel sheet after the hot rolling step to obtain a cold rolled steel sheet; and an annealing step of heating the cold rolled steel sheet to an annealing temperature of higher than an Ac1 point and equal to or lower than (an Ac3 point + 50°C), the annealing temperature satisfying expression (1) in a temperature range of 600°C to 700°C and having a temperature difference of 50°C or lower in the temperature distribution in the sheet width direction.
[Math. 2]

$$2\,5\,0\,0 \le \sum_{i=1}^{n} T_i \times t \qquad \cdots \text{ expression (1)}$$

In expression (1), t is a time (second) obtained by dividing a time taken from 600°C to 700°C into n equal parts (n: an integer of 10 or more), $T_i = (S_{i+1} + S_i)/2$, i: a natural number of n or less, $S_1 = 600°C$, $S_{n+1} = 700°C$, and $S_i$ is a temperature (°C) at a time t × (i - 1) seconds after a time when the temperature reaches 600°C.

Hot Rolling

Examples of a method for hot-rolling a steel slab include a method in which a slab is heated and then rolled, a method in which a slab is directly rolled after continuous casting without heating, and a method in which a slab is subjected to a short-term process of heating after continuous casting and then rolled. In the production method of the present invention, it is important to set the slab heating temperature to 1,220°C or higher. When the slab heating temperature is lower than 1,220°C, Ti-containing precipitates formed during casting are not sufficiently dissolved, and the amount of precipitates increases, thereby deteriorating the material uniformity. The upper limit of the slab heating temperature is preferably, but not particularly limited to, 1,400°C or lower.

In hot rolling, the average heating rate during slab heating may be 5 to 15 °C/min, as in the usual manner.

Slab Heating Time: 1.0 Hour or More

When the slab heating time is less than 1.0 hour, the Ti-containing precipitates are not sufficiently dissolved, resulting in a large amount of precipitates and a deterioration in material uniformity. Thus, the slab heating time at a slab heating temperature of 1,220°C or higher is 1.0 hour or more. The upper limit of the slab heating time is preferably, but not particularly limited to, 3.0 hours or less.

Coiling Temperature: 650°C or Lower

A coiling temperature of higher than 650°C results in an increase in the amount of Ti-containing precipitates formed during coiling to fail to inhibit the variations in the area fraction of non-recrystallized ferrite across the width of the steel sheet, resulting in a deterioration in material uniformity. Thus, the coiling temperature is 650°C or lower, preferably 640°C or lower. Descaling may be performed as appropriate to remove primary and secondary scales formed on the surfaces of the steel sheet. Preferably, the hot rolled coil is sufficiently pickled to reduce the remaining scale before the cold rolling. In addition, from the viewpoint of reducing the cold rolling load, the hot rolled steel sheet may be annealed as necessary. A coiling temperature of lower than 400°C can result in a defective shape of the steel sheet or excessive hardening of the steel sheet to cause fracture during cold rolling. Thus, the coiling temperature is preferably 400°C or higher, more preferably 420°C or higher.

Difference in Coiling Temperature in Temperature Distribution in Sheet Width Direction: 50°C or Lower

The difference in temperature (difference in coiling temperature) between the center portion and both end portions (positions 50 mm away from the edges of the steel sheet in the width direction toward the center of the steel sheet in the width direction) in the width direction of the steel sheet during coiling is an important manufacturing condition for controlling the area fraction of non-recrystallized ferrite described above by adjusting the amount of Ti-containing precipitates precipitated. A smaller difference in coiling temperature is more preferred. When the difference in coiling temperature in the temperature distribution in the sheet width direction is higher than 50°C, the differences in the amount and diameter of Ti-containing precipitates are significant between a portion where the coiling temperature is high and a portion where the coiling temperature is low. As a result, variations in recrystallization inhibition effect in the sheet width direction are increased to fail to obtain a high strength steel sheet having a small difference in the area fraction of non-recrystallized ferrite after annealing. Therefore, the difference in coiling temperature in the temperature distribution in the sheet width direction is 50°C or lower, preferably 40°C or lower, more preferably 30°C or lower. The temperature distribution in the sheet width direction can be measured with a radiation thermometer and confirmed with a thermoviewer that allows for planar observation. The "difference in coiling temperature" is a difference between the maximum value and the minimum value in the above temperature distribution.

The temperature distribution in the sheet width direction may be adjusted by, for example, using an edge heater to heat the vicinities of the end portions of the steel sheet in the width direction or by adjusting the amount of cooling by edge masking. The heating method is not particularly limited, and direct heating, induction heating, or the like can be used. The lower limit of the difference is not particularly limited, but is preferably 5°C or higher because a large amount of capital investment, such as installation of an edge heater immediately before coiling, is required to make the difference lower than 5°C.

(Suitable Condition) Difference in Coiling Temperature in Temperature Distribution in Longitudinal Direction of Steel Sheet: 70°C or Less

At the center portion in the longitudinal direction of the steel sheet, the coiling temperature tends to be the highest, and the cooling rate after coiling tends to be the lowest. At the leading end portion and the trailing end portion in the longitudinal direction of the steel sheet, the coiling temperature tends to be the lowest and the cooling rate after coiling tends to be the highest.

Thus, the center portion in the longitudinal direction of the steel sheet tends to have the least amount of fine precipitates and the least amount of non-recrystallized ferrite. The leading end portion and the trailing end portion in the longitudinal direction of the steel sheet tend to have the largest amount of fine precipitates and the largest amount of non-recrystallized ferrite.

Thus, in the present invention, a smaller difference in temperature (difference in coiling temperature) between the leading end portion (a position 1 m away from the leading edge toward the center in the longitudinal direction), the center portion, and the trailing end portion (a position 1 m away from the trailing edge toward the center in the longitudinal direction) in the longitudinal direction (rolling direction) of the steel sheet during coiling is more preferred in order to control the area fraction of non-recrystallized ferrite by controlling the amount of Ti-containing precipitates precipitated.

In the temperature distribution in the longitudinal direction of the steel sheet, when the difference in coiling temperature is higher than 70°C, the differences in the amount and diameter of Ti-containing precipitates are significant between a portion where the coiling temperature is high and a portion where the coiling temperature is low. As a result, variations in recrystallization inhibition effect in the longitudinal direction are increased to fail to obtain a high strength steel sheet having a small difference in the area fraction of non-recrystallized ferrite after annealing. Thus, in the temperature distribution in the longitudinal direction of the steel sheet, the difference in coiling temperature is preferably 70°C or lower, more preferably 50°C or lower, even more preferably 40°C or lower.

Cold Rolling

When the rolling reduction ratio (cumulative rolling reduction ratio (cold rolling reduction ratio)) is 20% or more in the cold rolling, recrystallization behavior and texture orientation in the subsequent continuous annealing can be stabilized. When the rolling reduction ratio is less than 20%, some austenite grains may coarsen during annealing, thereby decreasing the strength. Thus, the rolling reduction ratio of the cold rolling is preferably 20% or more.

The upper limit of the rolling reduction ratio is not set, but is preferably 95% or less in consideration of the cold rolling load.

Annealing Step

In the annealing step of the present invention, the cold rolled steel sheet obtained in the cold rolling step is heated at an annealing temperature of higher than an Ac1 point and equal to or lower than (an Ac3 point + 50°C), the annealing temperature satisfying expression (1) in a temperature range of 600°C to 700°C and having a temperature difference of 50°C or lower in the temperature distribution in the sheet width direction.

[Math. 3]

$$2500 \leq \sum_{i=1}^{n} T_i \times t \qquad \cdots \text{ expression (1)}$$

In expression (1),

t is a time (second) obtained by dividing a time taken from 600°C to 700°C into n equal parts (n: an integer of 10 or more), $T_i = (S_{i+1} + S_i)/2$, i: a natural number of n or less, $S_1 = 600°C$, $S_{n+1} = 700°C$, and $S_i$ is the i-th temperature (°C) at a time t × (i - 1) seconds after a time when the temperature reaches 600°C.

Specifically, $S_i$ is the i-th temperature (°C) from 600°C toward 700°C. That is, with regard to $S_1$ to $S_{n+1}$, $S_1$ is set to the start temperature: 600°C, and the temperatures are specified in the order of $S_2$, $S_3$, $S_4$, ... as the time t increases toward the reached temperature $S_{n+1}$: 700°C.

In the present invention, expression (1) described above is satisfied in the temperature range of 600°C to 700°C.

To set the right side of expression (1) described above, the index of the thermometer in the furnace in a heating process and a soaking process is used. In addition, the thermal history of the steel sheet can be grasped by back calculation from the thermal history actually exposed in consideration of the line speed. The right side of equation (1) described above can be set from the relationship between the temperature and the time.

Recrystallization is promoted in the temperature range of 600°C to 700°C. It is necessary to increase the residence time in this temperature range in order to promote recrystallization. The increase in residence time promotes the recrystallization and, in addition, ensures the temperature uniformity in the entire width of the sheet, thereby improving the uniformity of the microstructure. When the residence time is decreased, recrystallization does not proceed sufficiently. The amount of non-recrystallized ferrite increases to cause variations in the recrystallization ratio in the width and longitudinal directions of the steel sheet, thereby deteriorating the material uniformity. It is also necessary to perform heating to a temperature close to 700°C as quickly as possible. Based on these technical ideas, expression (1) described above is satisfied in the temperature range of 600°C to 700°C. Preferably, the following expression (1A) is satisfied. More preferably, the following expression (1B) is satisfied.

[Math. 4]

$$10000 \leq \sum_{i=1}^{n} T_i \times t \qquad \cdots \text{ expression (1A)}$$

[Math. 5]

$$25000 \leq \sum_{i=1}^{n} T_i \times t \qquad \cdots \text{ expression (1B)}$$

In each of expression (1A) and expression (1B),

t is a time (second) obtained by dividing a time taken from 600°C to 700°C into n equal parts (n: an integer of 10 or more), $T_i = (S_{i+1} + S_i)/2$, i: a natural number of n or less, $S_1 = 600°C$, $S_{n+1} = 700°C$, and $S_i$ is the i-th temperature (°C) at a time t × (i - 1) seconds after a time when the temperature reaches 600°C.

Difference in Temperature in Temperature distribution in Sheet width direction during heating process from 600°C to 700°C: 50°C or Lower

A difference in temperature between the center portion and the end portions (positions 50 mm away from the edges of the steel sheet in the width direction toward the center of the steel sheet in the width direction), the 1/4 position, and the 3/4 position during heating is important for controlling the difference in the area fraction of non-recrystallized ferrite after annealing to 5% or less due to the recrystallization promoting effect. Thus, a smaller difference in temperature is more preferred. A difference in temperature of higher than 50°C results in a significant difference of the recrystallization ratio to cause the difference in the area fraction of non-recrystallized ferrite after annealing to be more than 5%, thereby failing to obtain a high strength steel sheet having a small difference in the area fraction of non-recrystallized ferrite after annealing, which is the object of the present invention. Thus, the difference in temperature is 50°C or lower. The difference in temperature is preferably 30°C or lower, more preferably 20°C or lower.

The temperature distribution in the sheet width direction can be determined by a radiation thermometer. The temperature distribution in the sheet width direction may be adjusted with, for example, an edge heater to heat the vicinities of the end portions of the steel sheet in the width direction or by adjusting the amount of cooling by edge masking. The heating method is not particularly limited, and direct heating, induction heating, or the like can be used. A smaller difference in temperature in the temperature distribution in the sheet width direction is more preferred. However, in consideration of not only the effect to be obtained but also the ease of adjustment, the difference in temperature is preferably 2°C or higher.

Annealing Temperature: Higher Than Ac1 Point and Equal to or Lower Than (Ac3 Point + 50°C)

When the annealing temperature is higher than the Ac1 point and equal to or lower than (the Ac3 point + 50°C), the area fractions of ferrite, bainite, and martensite can be appropriately controlled. An annealing temperature of lower than the Ac1 point results in an insufficient amount of austenite during annealing, thereby failing to obtain sufficient strength. An annealing temperature of equal to or higher than (Ac3 point + 50°C) results in a marked increase in the grain size of reverse-transformed austenite to cause a marked increase in the grain size of ferrite and/or bainite and martensite, failing to ensure sufficient tensile strength. In addition, a desired amount of ferrite cannot be ensured. The holding time is preferably, but not particularly limited to, 10 seconds or more. The holding time is preferably 900 seconds or less.

The Ac1 point and the Ac3 point used here are calculated by the following formulae. In the following formulae, [element symbol] indicates the amount of each element contained (mass%), and the amount of element that is not contained is 0 (zero) ("Leslie's Tekko Zairyo Gaku (Leslie's Physical Metallurgy of Steels", Maruzen Inc., published May 31, 1985, page 273).

$$Ac1 \ (°C) = 723 - 10.7 \times [Mn] - 16.9 \times [Ni] + 29.1 \times [Si] + 16.9 \times [Cr] + 290 \times [As] + 6.38 \times [W]$$

$$Ac3 \ (°C) = 910 - 203 \times [C]^{1/2} - 15.2 \times [Ni] + 44.7 \times [Si] + 104 \times [V] + 31.5 \times [Mo] + 13.1 \times [W] - (30 \times [Mn] + 11 \times [Cr] + 20 \times [Cu] - 700 \times [P] - 400 \times [sol. \ Al] - 120 \times [As] - 400 \times [Ti])$$

The cooling conditions after soaking at the annealing temperature are not particularly limited. Examples thereof include conditions of a cooling stop temperature of 400°C to 500°C, an average cooling rate of 30 °C/s or less, and a holding time of 10 to 100 seconds in a temperature range of 400°C to 500°C.

A coating step of performing coating treatment can be conducted after the annealing step as long as the properties of the steel sheet are not changed. The coating treatment is, for example, treatment of performing galvanizing, such as electrogalvanizing, hot-dip galvanizing, or hot-dip galvannealing, on the surfaces of the steel sheet. When hot-dip galvanizing is performed on the surfaces of the steel sheet, the steel sheet obtained as described above is preferably immersed in a zinc coating bath at 440°C or higher and 500°C or lower to form a hot-dip galvanized layer on the surfaces of the steel sheet, for example. After the coating treatment, the coating weight is preferably adjusted by gas wiping or the like.

The steel sheet after the hot-dip galvanizing treatment may be subjected to an alloying treatment to form a hot-dip galvannealed layer. When the hot-dip galvanized coating is alloyed, the alloying is preferably performed by holding the hot-dip galvanized coating in a temperature range of 450°C to 600°C for 5 seconds or more. When the holding time is less than 5 seconds, alloying does not proceed sufficiently, and the coating adhesion and corrosion resistance tend to deteriorate. Thus, the holding time is preferably 5 seconds or more.

When the alloying treatment is performed, alloying does not proceed sufficiently at a holding temperature of lower than 450°C, thereby deteriorating the coating adhesion and corrosion resistance. When the holding temperature is higher than 600°C, alloying proceeds excessively, causing a problem such as powdering during pressing. Thus, the holding temperature is preferably 450°C to 600°C.

When the surfaces of the steel sheet are subjected to electrogalvanizing, the treatment conditions of the electrogalvanizing treatment are not particularly limited, and the electrogalvanizing treatment may be performed in the usual manner.

(Suitable Conditions) After Coating Step, Coated Steel Sheet Is Cooled to Cooling Stop Temperature Equal to or Higher Than Room Temperature and Equal to or Lower Than 250°C, then Reheated to Temperature Range of Cooling Stop Temperature to 440°C, and Held for 20 Seconds or More.

The cooling conditions after the coating step are not particularly limited, and may be those used in the usual manner. As a cooling method, for example, gas jet cooling, mist cooling, roll cooling, water cooling, air cooling, or the like can be used. From the viewpoint of preventing surface oxidation, the steel sheet is cooled to a temperature equal to or higher than room temperature and equal to or lower than 250°C.

The room temperature is not particularly limited, and may be 10°C to 30°C.

The average cooling rate is preferably 1 °C/s or more and 50 °C/s or less.

Then, the steel sheet is reheated to a temperature range of the cooling stop temperature to 440°C to enable a reduction in the area fraction of fresh martensite in martensite of the final microstructure, thereby providing a more uniform microstructure. When the temperature of the steel sheet is lower than the martensite transformation point, non-transformed austenite is transformed into martensite. The martensite transformed at a high temperature is tempered during cooling. Thus, the final microstructure contains a mixture of fresh martensite and tempered martensite. By reheating, the fresh martensite is tempered to become tempered martensite, and the martensite in the final microstructure becomes tempered martensite, thereby improving the uniformity of the microstructure. As the uniformity of the microstructure improves, the uniformity of the material also improves. When the reheating temperature is higher than 440°C, the coating, such as galvanizing coating, is partially melted and adheres to the roll, thereby failing to provide a coated steel sheet such as a hot-dip galvanized steel sheet uniformly galvanized. In addition, there is a possibility that a desired tensile strength (TS) is not obtained because of excessive progress of tempering. A reheating time of less than 20 seconds does not result in a sufficient tempering effect.

Therefore, when reheating is performed after the coating step, the steel sheet is cooled to a cooling stop temperature equal to or higher than room temperature and equal to or lower than 250°C, then reheated to a temperature range of the cooling stop temperature to 440°C, and held for 20 seconds or more.

Thereafter, temper rolling may be performed at an elongation rate of 0.1% to 5.0% as necessary.

According to the manufacturing method according to the present embodiment described above, it is possible to control the microstructural fraction and the variations in the area fraction of non-recrystallized ferrite in the width and longitudinal directions of the steel sheet by controlling the hot rolling conditions and the annealing temperature and time, making it possible to provide a high strength steel sheet having excellent material uniformity.

A member of the present invention and a method for manufacturing the same will be described below.

The member of the present invention is obtained by subjecting a steel sheet of the present invention to at least one of forming and welding. A method for manufacturing a member of the present invention includes a step of subjecting a steel sheet manufactured by the method for manufacturing a steel sheet of the present invention to at least one of forming and welding.

The steel sheet of the present invention has both high strength and material uniformity. Thus, a member obtained by the use of the steel sheet of the present invention can maintain a good part shape. Therefore, the member of the present invention can be suitably used for, for example, a structural member for an automobile.

The forming may be performed by any general processing method such as press working. As the welding, general welding, such as spot welding and arc welding, can be used without limitation.

EXAMPLES

[Example 1]

The present invention will be described in detail with reference to examples. However, the scope of the invention is not limited to the examples.

Manufacturing of Steel Sheet for Evaluation

Steels having chemical compositions given in Table 1 were prepared and cast into slabs. Each of the slabs was cooled to room temperature, heated under the conditions given in Table 2, hot-rolled under conditions that included a finish rolling temperature of 900°C and a finished sheet thickness of 3.2 mm, and coiled. The produced hot rolled steel sheets were pickled and cold-rolled to form cold rolled steel sheets having a finished sheet thickness of 1.4 mm, and the cold rolled steel sheets were annealed under the conditions given in Table 2 to produce steel sheets (high strength steel sheets).

The holding time at the annealing temperature was 100 seconds.

In Table 2, in the following expression (1), n = 10, and t is a time (second) obtained by dividing the time taken from 600°C to 700°C into 10 equal parts.

[Math. 6]

$$2500 \leq \sum_{i=1}^{n} T_i \times t \qquad \cdots \text{expression (1)}$$

In expression (1), $T_i = (S_{i+1} + S_i)/2$, i is a natural number of 10 or less, $S_i = 600°C$, and $S_i$ is the i-th temperature (°C). That is, for $S_1$ to $S_{11}$, $S_1$: start temperature = 600°C, $S_{11}$: reached temperature = 700°C. As the time t increases from the start temperature to the reached temperature, the temperatures are specified in the order of $S_2$, $S_3$, $S_4$, $S_5$, $S_6$, $S_7$, $S_8$, $S_9$, and $S_{10}$.

In the coating step, a hot-dip galvanizing treatment or a galvannealing treatment was performed to provide a hot-dip galvanized steel sheet (hereinafter, also referred to as GI) or a galvannealed steel sheet (hereinafter, also referred to as GA).

In Table 2, the types of coating step are also indicated by "GI" and "GA". In Table 2, in the case of the GI steel sheet, the alloying temperature is indicated by "-" because no alloying treatment is performed.

In the case of cold rolled steel sheet, the coating type is indicated by "-". The galvanizing bath temperature was 470°C in both cases of producing GI and GA.

The coating weight of the galvanized layer was 45 to 72 g/m² per side when GI was produced, and 45 g/m² per side when GA was produced.

In the case of GI, the composition of the galvanized layer of the finally obtained hot-dip galvanized steel sheet contained, Fe: 0.1 to 1.0 mass%, and Al: 0.2 to 0.33 mass%, with the balance being Zn and incidental impurities. In the case of GA, the composition of the galvanized layer contained Fe: 8.0 to 12.0 mass%, and Al: 0.1 to 0.23 mass%, with the balance being Zn and incidental impurities. Each of the galvanized layers was formed on each surface of the base steel sheet.

In No. 36, as the reheating step after the coating step, the steel sheet was subjected to treatment of cooling to a cooling stop temperature of 30°C, then reheating to a reheating temperature of 180°C, and holding for 50 seconds.

The obtained steel sheet had a length of 1,000 mm in the sheet width direction and a length of 1,000 m in the longitudinal direction (rolling direction).

[Table 1]

| Steel ID | Chemical composition (mass%) | | | | | | | | | Ac1 (°C) | Ac3 (°C) | Remarks |
|---|---|---|---|---|---|---|---|---|---|---|---|---|
| | C | Si | Mn | P | S | sol. Al | N | Ti | Others | | | |
| A | 0.11 | 0.40 | 1.9 | 0.006 | 0.0009 | 0.026 | 0.0029 | 0.031 | - | 714 | 830 | Conforming steel |
| B | 0.29 | 0.80 | 1.4 | 0.006 | 0.0010 | 0.044 | 0.0028 | 0.011 | - | 731 | 821 | Conforming steel |
| C | 0.13 | 0.02 | 2.4 | 0.005 | 0.0004 | 0.025 | 0.0050 | 0.034 | - | 698 | 793 | Conforming steel |
| D | 0.14 | 2.80 | 2.8 | 0.006 | 0.0014 | 0.038 | 0.0033 | 0.018 | - | 775 | 902 | Conforming steel |
| E | 0.15 | 0.70 | 1.2 | 0.007 | 0.0008 | 0.037 | 0.0045 | 0.030 | - | 731 | 858 | Conforming steel |
| F | 0.20 | 1.00 | 3.4 | 0.005 | 0.0019 | 0.021 | 0.0046 | 0.042 | - | 716 | 791 | Conforming steel |
| G | 0.21 | 0.90 | 2.7 | 0.006 | 0.0005 | 0.054 | 0.0041 | 0.009 | - | 720 | 806 | Conforming steel |
| H | 0.11 | 1.30 | 2.9 | 0.006 | 0.0006 | 0.041 | 0.0037 | 0.090 | - | 730 | 870 | Conforming steel |
| I | 0.14 | 0.80 | 2.5 | 0.004 | 0.0008 | 0.038 | 0.0044 | 0.017 | - | 720 | 820 | Conforming steel |
| J | 0.12 | 1.20 | 2.1 | 0.006 | 0.0011 | 0.039 | 0.0038 | 0.040 | - | 735 | 866 | Conforming steel |
| K | 0.13 | 0.90 | 1.8 | 0.007 | 0.0009 | 0.044 | 0.0021 | 0.010 | - | 730 | 850 | Conforming steel |
| L | 0.19 | 0.40 | 1.6 | 0.008 | 0.0008 | 0.036 | 0.0029 | 0.027 | B: 0.0010, V: 0.003, Cu: 0.2 | 718 | 819 | Conforming steel |

(continued)

| Steel ID | Chemical composition (mass%) | | | | | | | | | Ac1 (°C) | Ac3 (°C) | Remarks |
|---|---|---|---|---|---|---|---|---|---|---|---|---|
| | C | Si | Mn | P | S | sol. Al | N | Ti | Others | | | |
| M | 0.20 | 1.50 | 1.5 | 0.006 | 0.0010 | 0.040 | 0.0035 | 0.018 | Cr: 0.04, V: 0.010, Zr: 0.004 | 751 | 869 | Conforming steel |
| N | 0.21 | 0.70 | 1.9 | 0.005 | 0.0011 | 0.029 | 0.0046 | 0.022 | Nb: 0.02, V: 0.005, W: 0.008 | 723 | 816 | Conforming steel |
| O | 0.25 | 1.10 | 1.1 | 0.006 | 0.0008 | 0.026 | 0.0040 | 0.026 | Ni: 0.02, Sb: 0.008 | 743 | 849 | Conforming steel |
| P | 0.11 | 0.20 | 3.4 | 0.007 | 0.0006 | 0.031 | 0.0030 | 0.023 | Sb 0.010, Sn: 0.005 | 692 | 776 | Conforming steel |
| Q | 0.24 | 0.70 | 1.1 | 0.006 | 0.0007 | 0.031 | 0.0023 | 0.016 | Ca: 0.0030, Mg: 0.0008 | 732 | 832 | Conforming steel |
| R | 0.14 | 1.40 | 3.1 | 0.005 | 0.0005 | 0.035 | 0.0043 | 0.042 | Mg: 0.0005, REM: 0.0003 | 731 | 838 | Conforming steel |
| S | 0.26 | 0.70 | 2.8 | 0.004 | 0.0005 | 0.032 | 0.0039 | 0.017 | Mo: 0.02, Cr: 0.60, Sb: 0.010 | 724 | 770 | Conforming steel |
| T | 0.08 | 1.50 | 2.6 | 0.008 | 0.0010 | 0.032 | 0.0039 | 0.022 | - | 739 | 869 | Comparative steel |
| U | 0.32 | 0.20 | 2.3 | 0.008 | 0.0010 | 0.017 | 0.0052 | 0.012 | - | 704 | 752 | Comparative steel |
| V | 0.26 | 3.10 | 2.4 | 0.009 | 0.0011 | 0.041 | 0.0034 | 0.037 | - | 788 | 911 | Comparative steel |
| W | 0.13 | 0.60 | 0.8 | 0.009 | 0.0011 | 0.038 | 0.0033 | 0.019 | - | 732 | 869 | Comparative steel |
| X | 0.11 | 0.90 | 3.6 | 0.009 | 0.0008 | 0.038 | 0.0044 | 0.017 | - | 711 | 803 | Comparative steel |
| Y | 0.14 | 0.40 | 2.4 | 0.010 | 0.0011 | 0.039 | 0.0034 | 0.150 | - | 709 | 863 | Comparative steel |

■ The balance other than the above is Fe and incidental impurities.

[Table 2]

| No. | Steel ID | Hot rolling conditions | | | | | Annealing conditions | | | | | Coating conditions | | Remarks |
|---|---|---|---|---|---|---|---|---|---|---|---|---|---|---|
| | | Slab heating temperature (°C) | Slab heating time (hr) | Coiling temperature (°C) | Difference in coiling temperature in sheet width direction (°C) | Difference in coiling temperature in longitudinal direction (°C) | *1 (°C·s) | *2 (°C) | Ac1 (°C) | Ac3 + 50 (°C) | Annealing temperature (°C) | Type | Alloying temperature (°C) | |
| 1 | A | 1290 | 1.5 | 570 | 20 | 20 | 71572 | 9 | 714 | 880 | 825 | GA | 520 | Conforming steel |
| 2 | B | 1260 | 1.2 | 590 | 15 | 30 | 41599 | 18 | 731 | 871 | 806 | GA | 530 | Conforming steel |
| 3 | C | 1250 | 1.3 | 560 | 30 | 10 | 48553 | 12 | 698 | 843 | 790 | GA | 520 | Conforming steel |
| 4 | 0 | 1290 | 1.2 | 550 | 20 | 40 | 73771 | 9 | 775 | 952 | 800 | GA | 520 | Conforming steel |
| 5 | E | 1270 | 1.4 | 550 | 25 | 20 | 55651 | 19 | 731 | 908 | 832 | GI | - | Conforming steel |
| 6 | F | 1290 | 1.6 | 560 | 30 | 20 | 54775 | 17 | 716 | 841 | 793 | GA | 520 | Conforming steel |
| 7 | G | 1260 | 1.6 | 540 | 10 | 10 | 55233 | 13 | 720 | 856 | 820 | GA | 530 | Conforming steel |
| 8 | H | 1270 | 1.3 | 580 | 20 | 30 | 38534 | 16 | 730 | 920 | 833 | GA | 520 | Conforming steel |
| 9 | I | 1290 | 1.2 | 610 | 30 | 20 | 138358 | 9 | 720 | 870 | 787 | GA | 520 | Conforming steel |
| 10 | J | 1260 | 1.5 | 560 | 10 | 40 | 32963 | 18 | 735 | 916 | 797 | - | - | Conforming steel |
| 11 | K | 1260 | 1.6 | 570 | 25 | 40 | 154627 | 13 | 730 | 900 | 844 | GA | 520 | Conforming steel |
| 12 | L | 1280 | 1.2 | 580 | 20 | 20 | 20061 | 8 | 718 | 869 | 850 | GA | 530 | Conforming steel |

EP 4 464 803 A1

17

| No. | Steel ID | Hot rolling conditions | | | | | Annealing conditions | | | | | Coating conditions | | Remarks |
|---|---|---|---|---|---|---|---|---|---|---|---|---|---|---|
| | | Slab heating temperature (°C) | Slab heating time (hr) | Coiling temperature (°C) | Difference in coiling temperature in sheet width direction (°C) | Difference in coiling temperature in longitudinal direction (°C) | *1 (°C·s) | *2 (°C) | Ac1 (°C) | Ac3 + 50 (°C) | Annealing temperature (°C) | Type | Alloying temperature (°C) | |
| 13 | M | 1290 | 1.5 | 520 | 30 | 30 | 53520 | 38 | 751 | 919 | 782 | GA | 520 | Conforming steel |
| 14 | N | 1290 | 1.5 | 610 | 20 | 30 | 39439 | 10 | 723 | 866 | 850 | GI | - | Conforming steel |
| 15 | O | 1250 | 1.4 | 540 | 10 | 20 | 140639 | 7 | 743 | 899 | 788 | GA | 520 | Conforming steel |
| 16 | P | 1260 | 1.3 | 560 | 15 | 30 | 54457 | 14 | 692 | 826 | 790 | GA | 520 | Conforming steel |
| 17 | Q | 1290 | 1.2 | 530 | 25 | 20 | 28794 | 13 | 732 | 882 | 792 | GA | 530 | Conforming steel |
| 18 | R | 1240 | 1.2 | 570 | 30 | 50 | 119676 | 6 | 731 | 888 | 790 | GA | 520 | Conforming steel |
| 19 | S | 1240 | 1.5 | 590 | 10 | 30 | 157269 | 9 | 724 | 820 | 784 | - | - | Conforming steel |
| 20 | T | 1290 | 1.2 | 520 | 20 | 40 | 55183 | 15 | 739 | 919 | 785 | GA | 520 | Comparative steel |
| 21 | U | 1240 | 1.4 | 580 | 20 | 20 | 88809 | 16 | 704 | 802 | 800 | GA | 520 | Comparative steel |
| 22 | V | 1290 | 1.5 | 560 | 15 | 10 | 27950 | 16 | 788 | 961 | 804 | GA | 530 | Comparative steel |
| 23 | W | 1250 | 1.1 | 550 | 30 | 30 | 45596 | 22 | 732 | 919 | 818 | GA | 520 | Comparative steel |
| 24 | X | 1240 | 1.6 | 520 | 20 | 20 | 50316 | 8 | 711 | 853 | 825 | GA | 520 | Comparative steel |

EP 4 464 803 A1

18

(continued)

| No. | Steel ID | Hot rolling conditions | | | | | *1 (°C·s) | *2 (°C) | Annealing conditions | | | Coating conditions | | Remarks |
|---|---|---|---|---|---|---|---|---|---|---|---|---|---|---|
| | | Slab heating temperature (°C) | Slab heating time (hr) | Coiling temperature (°C) | Difference in coiling temperature in sheet width direction (°C) | Difference in coiling temperature in longitudinal direction (°C) | | | Ac1 (°C) | Ac3 + 50 (°C) | Annealing temperature (°C) | Type | Alloying temperature (°C) | |
| 25 | Y | 1260 | 1.2 | 550 | 20 | 30 | 63234 | 19 | 709 | 913 | 810 | GA | 520 | Comparative steel |
| 26 | I | 1150 | 1.5 | 590 | 20 | 10 | 61598 | 19 | 720 | 870 | 820 | GA | 530 | Comparative steel |
| 27 | I | 1290 | 0.4 | 610 | 30 | 30 | 117118 | 13 | 720 | 870 | 788 | GA | 520 | Comparative steel |
| 28 | I | 1280 | 1.5 | 670 | 20 | 10 | 31234 | 6 | 720 | 870 | 834 | GA | 520 | Comparative steel |
| 29 | J | 1240 | 1.2 | 590 | 60 | 30 | 63286 | 14 | 735 | 916 | 844 | GA | 530 | Comparative steel |
| 30 | J | 1240 | 1.2 | 540 | 30 | 50 | 2400 | 13 | 735 | 916 | 844 | GA | 520 | Comparative steel |
| 31 | J | 1270 | 1.5 | 550 | 25 | 40 | 5209 | 22 | 735 | 916 | 782 | GA | 520 | Conforming steel |
| 32 | K | 1280 | 1.6 | 590 | 30 | 30 | 18150 | 60 | 730 | 900 | 812 | GA | 530 | Comparative steel |
| 33 | K | 1280 | 1.6 | 590 | 30 | 30 | 79452 | 14 | 730 | 900 | 710 | GA | 520 | Comparative steel |
| 34 | K | 1260 | 1.3 | 550 | 25 | 40 | 23250 | 15 | 730 | 900 | 920 | GA | 520 | Comparative steel |
| 35 | K | 1230 | 1.2 | 640 | 30 | 80 | 14620 | 20 | 730 | 900 | 780 | GA | 530 | Conforming steel |

(continued)

| No. | Steel ID | Hot rolling conditions | | | | | Annealing conditions | | | | | Coating conditions | | Remarks |
|---|---|---|---|---|---|---|---|---|---|---|---|---|---|---|
| | | Slab heating temperature (°C) | Slab heating time (hr) | Coiling temperature (°C) | Difference in coiling temperature in sheet width direction (°C) | Difference in coiling temperature in longitudinal direction (°C) | *1 (°C·s) | *2 (°C) | Ac1 (°C) | Ac3 + 50 (°C) | Annealing temperature (°C) | Type | Alloying temperature (°C) | |
| 36 | K | 1260 | 1.6 | 550 | 20 | 30 | 58442 | 10 | 730 | 900 | 830 | GA | 520 | Conforming steel |

*1: Right side ($\Sigma T_i \times t$) of expression (1).
*2: A difference in temperature in the width direction at 600°C to 700°C.

The resulting steel sheets were subjected to quantification of the metallic microstructure, and further subjected to a tensile test and a hole expansion test.

For the quantification of the metallic microstructure, test pieces were taken from each steel sheet in a direction perpendicular to the rolling direction at five locations, i.e., a center portion and both end portions (positions 50 mm away from the end portions of the steel sheet in the width direction toward the center of the steel sheet in the width direction) in the sheet width direction of the steel sheet and a 1/4 position and a 3/4 position in the width direction. Then, a cross section parallel to the rolling direction and perpendicular to the steel sheet surface was mirror-polished.

The sampling positions for these five locations in the longitudinal direction of the steel sheet were the center portion in the longitudinal direction of the steel sheet. In addition, test pieces were similarly taken from a leading end portion (a position 1 m away from the leading edge toward the center in the longitudinal direction), a center portion, and a trailing end portion (a position 1 m away from the trailing edge toward the center in the longitudinal direction) of the steel sheet in the longitudinal direction (rolling direction) in such a manner that the cross section parallel to the rolling direction and perpendicular to the steel sheet surface was an observation surface. Then the test pieces were mirror-polished.

In the leading end portion, the center portion, and the trailing end portion of the steel sheet in the longitudinal direction (rolling direction) of the steel sheet, the test pieces were taken from the center portion in the width direction.

The cross sections in the thickness direction were etched with a nital solution to expose the microstructure, and then observed with a scanning electron microscope (SEM). The area fractions of ferrite, martensite, bainite, and non-recrystallized ferrite were examined by the point counting method, according to which a $16 \times 15$ mesh with a 4.8 $\mu$m interval is overlaid on an 82 pm $\times$ 57 pm area in actual length in a 1,500$\times$ SEM image, and the number of mesh points that fall in the individual phases was counted. Each area fraction was determined by an average value of three area fractions obtained from separate 1,500$\times$ SEM images. The area fractions of ferrite, martensite, and bainite in the present invention were values determined at the center portion in the longitudinal direction of the center portion in the width direction of the steel sheet. The area fraction of non-recrystallized ferrite was determined at the center portion and both end portions in the width direction, and at the 1/4 position and the 3/4 position in the width direction. The difference between the maximum value and the minimum value of the measurements at a total of five locations was calculated. Similarly, the area fractions were determined at the leading end portion, the center portion, and the trailing end portion in the longitudinal direction of the steel sheet. The difference between the maximum value and the minimum value of the measurements taken at the three locations was calculated. Among the metallic microstructures observed above, ferrite is a microstructure formed by transformation from austenite at a relatively high temperature and composed of crystal grains of a bcc lattice. Ferrite and non-recrystallized ferrite appear as black microstructures, and martensite appears as a white microstructure. Non-recrystallized ferrite has sub-boundaries within the crystal grains, and the sub-boundaries appear as white. Bainite is a microstructure that is formed from austenite at a relatively low temperature (equal to or higher than the martensite transformation point) and in which spherical carbides are dispersed in acicular or platelike ferrite.

The area fraction of the remaining microstructure other than ferrite, martensite, and bainite was calculated by subtracting the total area fraction of ferrite, martensite, and bainite from 100%. In the present invention, the remaining microstructure was considered to be the total area fraction of pearlite and retained austenite.

In the present invention, the difference between the maximum value and the minimum value of the area fraction of non-recrystallized ferrite measured at a center portion, both end portions, a 1/4 position, and a 3/4 position in the width direction (perpendicular to the rolling direction) of the steel sheet was defined as a "difference between the maximum value and the minimum value of the area fraction of non-recrystallized ferrite in the sheet width direction of the steel sheet".

In the present invention, the difference between the maximum value and the minimum value of the area fraction of non-recrystallized ferrite measured at the leading end portion, the center portion, and the trailing end portion in the longitudinal direction (rolling direction) of the steel sheet was defined as a "difference between the maximum value and the minimum value of the area fraction of non-recrystallized ferrite in the longitudinal direction of the steel sheet".

For the tensile test, a JIS No. 5 test piece having a gauge length of 50 mm and a gauge width of 25 mm was taken from the direction perpendicular to the rolling direction of each steel sheet. The tensile test was performed at a tensile speed of 10 mm/min in accordance with the requirements of JIS Z 2241 (2011). The tensile strength (denoted as TS in Table 3) was measured by the tensile test. The tensile strength (TS) given in Table 3 is a value measured by collecting the test piece at the center portion in the longitudinal direction (rolling direction) and the center portion in the width direction of each steel sheet.

The hole expansion ratio was evaluated by a hole expansion test in accordance with the requirements of JIS Z 2256. Three test pieces 100 mm square were taken from a center portion in the width direction of each of the resulting steel sheets. The test piece was punched with a punch having a diameter of 10 mm and a die having a clearance of 12.5%. The hole expansion ratio ($\lambda$) was measured with a conical punch having a vertex angle of 60° at a travel speed of 10 mm/min with the burr surface facing upward. The average value was evaluated. The formula is described below.

$$\text{Hole expansion ratio } \lambda \ (\%) = \{(D - D0)/D0\} \times 100$$

where D: the diameter of the hole when a crack penetrates through the sheet thickness, and D0: the initial hole diameter (10 mm).

Three test pieces 100 mm square were taken from each of a total of five locations, i.e., a center portion and both end portions (positions 50 mm away from the edges of each steel sheet in the width direction toward the center of the steel sheet in the width direction), and a 1/4 position and a 3/4 position in the width direction. Then the hole expansion test was performed as described above. A difference between the maximum value and the minimum value of the average values of the three test pieces at the respective locations was defined as a "difference between the maximum value and the minimum value of the hole expansion ratio in the sheet width direction" in the present invention. Three test pieces 100 mm square were taken from each of three locations of the leading end portion, the center portion, and the trailing end portion of each steel sheet in the longitudinal direction (rolling direction), and the hole expansion test was performed as described above. A difference between the maximum value and the minimum value of the average values of the three test pieces at the respective locations was defined as a "difference between the maximum value and the minimum value of the hole expansion ratio of the steel sheet in the longitudinal direction".

[Table 3]

| No. | Steel ID | Microstructure | | | | *2 | *3 | TS (MPa) | A (%) | *4 | *5 | Remarks |
|---|---|---|---|---|---|---|---|---|---|---|---|---|
| | | Area fraction of ferrite (%) | Area fraction of martensite and bainite (%) | Area fraction of non-recrystallized ferrite (%) | Others (%) *1 | | | | | | | |
| 1 | A | 32 | 67 | 0 | 1 | 1 | 1 | 1194 | 17 | 1 | 2 | Conforming steel |
| 2 | B | 19 | 81 | 3 | 0 | 3 | 2 | 1899 | 19 | 2 | 3 | Conforming steel |
| 3 | C | 19 | 81 | 2 | 0 | 3 | 3 | 1479 | 18 | 2 | 2 | Conforming steel |
| 4 | D | 40 | 53 | 0 | 7 | 1 | 0 | 1283 | 16 | 0 | 1 | Conforming steel |
| 5 | E | 10 | 88 | 1 | 2 | 4 | 2 | 1637 | 20 | 2 | 2 | Conforming steel |
| 6 | F | 40 | 57 | 2 | 3 | 3 | 1 | 1362 | 16 | 2 | 3 | Conforming steel |
| 7 | G | 39 | 61 | 1 | 0 | 2 | 2 | 1417 | 16 | 1 | 2 | Conforming steel |
| 8 | H | 13 | 86 | 3 | 1 | 3 | 4 | 1610 | 19 | 2 | 2 | Conforming steel |
| 9 | I | 16 | 82 | 0 | 2 | 0 | 2 | 1576 | 19 | 1 | 3 | Conforming steel |
| 10 | J | 26 | 74 | 4 | 0 | 3 | 2 | 1436 | 18 | 3 | 4 | Conforming steel |
| 11 | K | 11 | 87 | 0 | 2 | 0 | 3 | 1611 | 20 | 1 | 2 | Conforming steel |
| 12 | L | 39 | 61 | 5 | 0 | 3 | 2 | 1339 | 17 | 3 | 4 | Conforming steel |
| 13 | M | 37 | 62 | 2 | 1 | 4 | 4 | 1432 | 17 | 3 | 3 | Conforming steel |
| 14 | N | 8 | 92 | 3 | 0 | 3 | 2 | 1885 | 20 | 2 | 2 | Conforming steel |
| 15 | O | 29 | 68 | 0 | 3 | 0 | 1 | 1597 | 18 | 1 | 2 | Conforming steel |

(continued)

| No. | Steel ID | Microstructure | | | | | | TS (MPa) | A (%) | *4 | *5 | Remarks |
|-----|----------|---------------------------------|-----------------------------------------------|------------------------------------------------|-------------|----|----|----------|-------|----|----|---------------------|
| | | Area fraction of ferrite (%) | Area fraction of martensite and bainite (%) | Area fraction of non-recrystallized ferrite (%) | Others (%) *1 | *2 | *3 | | | | | |
| 16 | P | 39 | 61 | 2 | 0 | 2 | 2 | 1208 | 16 | 2 | 1 | Conforming steel |
| 17 | Q | 20 | 79 | 4 | 1 | 3 | 3 | 1731 | 19 | 3 | 2 | Conforming steel |
| 18 | R | 22 | 78 | 0 | 0 | 0 | 1 | 1582 | 18 | 1 | 3 | Conforming steel |
| 19 | S | 39 | 61 | 0 | 0 | 0 | 2 | 1499 | 16 | 1 | 2 | Conforming steel |
| 20 | T | 32 | 68 | 1 | 0 | 2 | 4 | 1095 | 17 | 2 | 3 | Comparative steel |
| 21 | U | 38 | 61 | 11 | 1 | 8 | 6 | 1580 | 16 | 11 | 12 | Comparative steel |
| 22 | V | 43 | 52 | 9 | 5 | 6 | 6 | 1456 | 16 | 12 | 11 | Comparative steel |
| 23 | W | 19 | 59 | 11 | 22 | 6 | 8 | 1197 | 16 | 14 | 12 | Comparative steel |
| 24 | X | 39 | 59 | 16 | 2 | 9 | 6 | 1232 | 14 | 13 | 12 | Comparative steel |
| 25 | Y | 25 | 73 | 19 | 2 | 10 | 9 | 1421 | 16 | 11 | 11 | Comparative steel |
| 26 | I | 16 | 84 | 19 | 0 | 7 | 7 | 1611 | 17 | 11 | 13 | Comparative steel |
| 27 | I | 39 | 57 | 14 | 4 | 9 | 6 | 1223 | 15 | 12 | 12 | Comparative steel |
| 28 | I | 17 | 79 | 11 | 4 | 9 | 8 | 1539 | 17 | 11 | 14 | Comparative steel |
| 29 | J | 26 | 74 | 13 | 0 | 12 | 10 | 1436 | 17 | 12 | 11 | Comparative steel |
| 30 | J | 34 | 64 | 20 | 2 | 15 | 11 | 1211 | 15 | 14 | 11 | Comparative steel |
| 31 | J | 18 | 79 | 8 | 3 | 5 | 5 | 1511 | 18 | 7 | 6 | Conforming steel |
| 32 | K | 22 | 74 | 12 | 4 | 8 | 7 | 1434 | 17 | 13 | 11 | Comparative steel |
| 33 | K | 96 | 0 | 9 | 4 | 5 | 5 | 998 | 10 | 9 | 8 | Comparative steel |
| 34 | K | 3 | 85 | 0 | 12 | 0 | 0 | 1165 | 19 | 11 | 6 | Comparative steel |
| 35 | K | 29 | 69 | 8 | 2 | 4 | 6 | 1365 | 17 | 6 | 12 | Conforming steel |

EP 4 464 803 A1

(continued)

| No. | Steel ID | Microstructure | | | | *2 | *3 | TS (MPa) | A (%) | *4 | *5 | Remarks |
|---|---|---|---|---|---|---|---|---|---|---|---|---|
| | | Area fraction of ferrite (%) | Area fraction of martensite and bainite (%) | Area fraction of non-recrystallized ferrite (%) | Others (%) *1 | | | | | | | |
| 36 | K | 28 | 72 | 3 | 0 | 4 | 3 | 1250 | 22 | 0 | 1 | Conforming steel |

*1: Others: Total area fraction of pearlite and retained austenite.
*2: Difference between maximum value and minimum value of area fraction of non-recrystallized ferrite in width direction.
*3: Difference between maximum value and minimum value of area fraction of non-recrystallized ferrite in longitudinal direction.
*4: Difference between maximum value and minimum value of $\lambda$ in width direction.
*5: Difference between maximum value and minimum value of $\lambda$ in longitudinal direction.

compositions and that were obtained under appropriate hot-rolling conditions and annealing conditions had a tensile strength TS of 1,180 MPa or more. In addition, the area fraction of non-recrystallized ferrite is 10% or less. The difference between the maximum value and the minimum value of the area fraction of non-recrystallized ferrite in the width direction is controlled to 5% or less. Regarding the material stability of the steel sheet, the difference between the maximum value and the minimum value of the hole expansion ratio in the width direction is controlled to 10% or less. That is, excellent material stability is obtained. The steel sheet of the present invention has both a tensile strength of 1,180 MPa or more and a difference between the maximum value and the minimum value of the hole expansion ratio in the width direction of the steel sheet of 10% or less. The steel sheets of the comparative examples do not satisfy at least one of these conditions.

[Example 2]

A steel sheet (galvanized steel sheet) of No. 1 (present invention example) in Table 3 of Example 1 was press-formed to produce a member of a present invention example. The steel sheet (galvanized steel sheet) of No. 1 (present invention example) in Table 3 of Example 1 and a steel sheet (galvanized steel sheet) of No. 2 (present invention example) in Table 3 of Example 1 were joined by spot welding to produce a member of a present invention example. These steel sheets (galvanized steel sheets) of the present invention had excellent material uniformity and high strength. It was confirmed that all of the members produced by forming the steel sheet No. 1 (present invention example) in Table 3 of Example 1 and the members produced by spot-welding the steel sheet No. 1 (present invention example) in Table 3 of Example 1 and the steel sheet No. 2 (present invention example) in Table 3 of Example 1 were suitably used for automotive frame parts and so forth.

[Example 3]

A steel sheet No. 10 (present invention example) in Table 3 of Example 1 was press-formed to produce a member of a present invention example. The steel sheet of No. 10 (present invention example) in Table 3 of Example 1 and a steel sheet of No. 19 (present invention example) in Table 3 of Example 1 were joined by spot welding to produce a member of a present invention example. These steel sheets (galvanized steel sheets) of the present invention had excellent material uniformity and high strength. It was confirmed that all of the members produced by forming the steel sheet No. 10 (present invention example) in Table 3 of Example 1 and the members produced by spot-welding the steel sheet No. 10 (present invention example) in Table 3 of Example 1 and the steel sheet No. 19 (present invention example) in Table 3 of Example 1 were suitably used for automotive frame parts and so forth.

**Claims**

1. A steel sheet having a chemical composition comprising, by mass%:

C: 0.10% or more and 0.30% or less,

Si: 0.01% or more and 3.0% or less,
Mn: 1.0% or more and 3.5% or less,
P: 0.002% or more and 0.100% or less,
S: 0.0002% or more and 0.0200% or less,
sol. Al: 0.20% or less (not including 0%),
N: 0.010% or less, and
Ti: 0.008 or more and 0.10% or less,
the balance being Fe and incidental impurities,

wherein a steel sheet microstructure contains, in terms of area fraction, ferrite: 5% or more and 50% or less, and a total of martensite and bainite: 50% or more and 95% or less,
non-recrystallized ferrite in the ferrite is 0% or more and 10% or less, in terms of area fraction, based on an entire microstructure, and
a difference between a maximum value and a minimum value of the area fraction of the non-recrystallized ferrite in a sheet width direction of the steel sheet is 5% or less.

2.  The steel sheet according to Claim 1, wherein a difference between a maximum value and a minimum value of the area fraction of the non-recrystallized ferrite in a longitudinal direction of the steel sheet is 5% or less.

3.  The steel sheet according to Claim 1 or 2, wherein the chemical composition further contains, by mass%, one or two or more selected from:

Nb: 0.2% or less,
B: 0.0050% or less,
Cu: 1% or less,
Ni: 0.5% or less,
Cr: 1.0% or less,
Mo: 0.3% or less,
V: 0.45% or less,
Zr: 0.2% or less, and
W: 0.2% or less.

4.  The steel sheet according to any one of Claims 1 to 3, wherein the chemical composition further contains, by mass%, one or two or more selected from:

Sb: 0.1% or less,
Sn: 0.1% or less,
Ca: 0.0050% or less,
Mg: 0.01% or less, and
REM: 0.01% or less.

5.  The steel sheet according to any one of Claims 1 to 4, wherein the steel sheet has a coated layer on a surface thereof.

6.  A member obtained by subjecting the steel sheet according to any one of Claims 1 to 5 to at least one of forming and welding.

7.  A method for manufacturing the steel sheet according to any one of Claims 1 to 4, the method comprising:

a hot rolling step of heating a steel slab at 1,220°C or higher for 1.0 hour or more, hot-rolling the steel slab, and performing coiling at a coiling temperature of 650°C or lower with a difference in coiling temperature of 50°C or lower in a temperature distribution in a sheet width direction to obtain a hot rolled steel sheet;
a cold rolling step of cold-rolling the hot rolled steel sheet after the hot rolling step to obtain a cold rolled steel sheet; and
an annealing step of heating the cold rolled steel sheet to an annealing temperature of higher than an Ac1 point and equal to or lower than (an Ac3 point + 50°C), the annealing temperature satisfying expression (1) in a temperature range of 600°C to 700°C and having a temperature difference of 50°C or lower in the temperature distribution in the sheet width direction,
[Math. 1]

$$2500 \leq \sum_{i=1}^{n} T_i \times t \quad \cdots \text{expression (1)}$$

where in expression (1), t is a time (second) obtained by dividing a time taken from 600°C to 700°C into n equal parts (n: an integer of 10 or more), $T_i = (S_{i+1} + S_i)/2$, i: a natural number of n or less, $S_1 = 600$°C, $S_{n+1} = 700$°C, and $S_i$ is a temperature (°C) at a time $t \times (i - 1)$ seconds after a time when the temperature reaches 600°C.

8. The method for manufacturing the steel sheet according to Claim 7, wherein in the hot rolling step, the steel slab is heated at 1,220°C or higher for 1.0 hour or more, hot-rolled, and coiled at a coiling temperature of 650°C or lower with a difference in coiling temperature of 50°C or lower in the temperature distribution in the sheet width direction and a difference in coiling temperature of 70°C or lower in a temperature distribution in a longitudinal direction of the steel sheet to obtain a hot rolled steel sheet.

9. The method for manufacturing the steel sheet according to Claim 7 or 8, further comprising a coating step of performing coating treatment after the annealing step.

10. The method for manufacturing the steel sheet according to Claim 9, wherein in the coating step, hot-dip galvanizing treatment is performed.

11. The method for manufacturing the steel sheet according to Claim 10, wherein alloying treatment is performed after the hot-dip galvanizing treatment in the coating step.

12. The method for manufacturing the steel sheet according to any one of Claims 9 to 11, further comprising, after the coating step, a reheating step of cooling the steel sheet to a cooling stop temperature equal to or higher than room temperature and equal to or lower than 250°C, then reheating the steel sheet to a temperature range of the cooling stop temperature to 440°C, and holding the steel sheet for 20 seconds or more.

13. A method for manufacturing a member, comprising a step of subjecting a steel sheet manufactured by the method for manufacturing the steel sheet according to any one of Claims 7 to 12 to at least one of forming and welding.

**INTERNATIONAL SEARCH REPORT**

| International application No. |
| --- |
| **PCT/JP2022/008224** |

**A. CLASSIFICATION OF SUBJECT MATTER**

**C21D 9/46**(2006.01)i; **C22C 38/00**(2006.01)i; **C23C 2/06**(2006.01)i; **C23C 2/28**(2006.01)i
FI: C22C38/00 301T; C21D9/46 J; C23C2/06; C23C2/28

According to International Patent Classification (IPC) or to both national classification and IPC

**B. FIELDS SEARCHED**

Minimum documentation searched (classification system followed by classification symbols)

C21D9/46; C22C38/00; C23C2/06; C23C2/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/020439 A1 (JFE STEEL CORP.) 04 February 2021 (2021-02-04) | 1-13 |
| A | WO 2016/031166 A1 (JFE STEEL CORP.) 03 March 2016 (2016-03-03) | 1-13 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **27 April 2022** | **17 May 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/008224**

| Patent document cited in search report | | | Publication date (day/month/year) | Patent family member(s) | | | Publication date (day/month/year) |
|---|---|---|---|---|---|---|---|
| WO | 2021/020439 | A1 | 04 February 2021 | EP | 3981891 | A1 | |
| | | | | KR | 10-2022-0024957 | A | |
| | | | | CN | 114207172 | A | |
| WO | 2016/031166 | A1 | 03 March 2016 | US | 2017/0283900 | A1 | |
| | | | | EP | 3187608 | A1 | |
| | | | | CN | 106661699 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4860784 B

- JP 2018016873 A

**Non-patent literature cited in the description**

- Leslie's Tekko Zairyo Gaku (Leslie's Physical Metallurgy of Steels. Maruzen Inc, 31 May 1985, 273